# EUROPEAN PATENT APPLICATION

(11) **EP 1 710 965 A1**
(43) Date of publication of application: **11.10.2006**
(21) Application number: 05102624.3
(22) Date of filing: 04.04.2005
(51) Int. Cl.: H04L 12/58

(54) **Method and System for Filtering Spoofed Electronic Messages**

(71) Applicant: Research In Motion Limited, Waterloo, Ontario N2L 3W8 (CA)
(72) Inventor: Estable, Luis Pablo, J9A 3J3, Hull (CA)
(74) Representative: Rickard, David John

(57) **Abstract**

Methods of detecting e-mail messages that are spoofed to appear from internal to a private network are provided. The methods involve examining the header of messages to determine if they purport to originate from internal to the network when in fact they originate external to the network. The presence of an Internet header can be used to this effect in private networks that do not use Internet headers to exchange internal email.

## Description

The present application is related to electronic messaging.

Electronic mail (email) has become a widely used technology for both business and personal communication. There are many different email systems available. There are public email systems, such as those based on the Internet's Simple Mail Transfer Protocol (SMTP), and there are proprietary email systems, such as Microsoft Exchange Server™, Lotus Notes™, and GroupWise™. Many private networks connected to the Internet make use of proprietary email systems which exchange email messages with SMTP based email systems on the Internet.

A known problem with email messaging is email message spoofing. Email spoofing refers to the practice of forging source address and related email message header information to misrepresent an email identity. By changing email message header information, an individual can make an email message appear to originate from a trusted source when in fact it originates elsewhere. If the email message recipient is not alerted to the spoofed email message, and trusts the message's authenticity, spoofing can be used to solicit sensitive information or to prompt the recipient to execute hostile code. The SMTP protocol is particularly vulnerable to email message spoofing because it does not have any built-in authentication to verify the source.

Conventional solutions have problems detecting spoofed email messages. Antivirus software can only detect email messages that contain a virus. Antivirus software only operates once the virus has been recognized and the software has been configured to detect that virus. The use of digital signatures provides a mechanism for ensuring that messages are from whom they appear to be, as well as ensuring that a message has not been altered in transit, but it requires that all users involved agree to employ the same mechanism. This is often impractical in a mixed community of email users interacting over both private and public networks.

### Summary

According to one broad aspect, the application provides a spoofed email filter (102) adapted to process email messages for a private network (101), the spoofed email filter comprising: an input (103) for receiving email messages; an output (104) for forwarding messages after being processed; the spoofed email filter being adapted to process (303) each email message to determine if the email message has been spoofed to appear to originate from the private network or not using email message headers and subjecting each email message that has been spoofed to special processing (304).

According to another broad aspect, the application provides a method comprising: receiving e-mail messages for a private network; processing each email message to determine if the email message has been spoofed to appear to originate from the private network or not using email message headers; subjecting each email message that has been spoofed to special processing (304).

In another embodiments, a computer readable medium having instructions stored thereon is provided for implementing one of the methods as summarized above.

Other aspects and features of the present application will become apparent, to those ordinarily skilled in the art, upon review of the following description of specific embodiments.

### Brief Description of the Drawings

The application will now be described in greater detail with reference to the accompanying diagrams, in which:
Figure 1A is a schematic diagram of a computer communication system containing a spoofed-email message filter;
Figure 1B is a schematic diagram of a computer communication system containing a spoofed-email message filter;
Figure 2 is an illustration showing an example of an SMTP email message header received by a Microsoft Outlook™ email message client;
Figure 3 is a flowchart of a method of processing an external email message;
Figure 4 is a flowchart of a method of processing an email message; and
Figure 5 is a schematic diagram of a computer communication system containing a spoofed-email message filter.

### Details

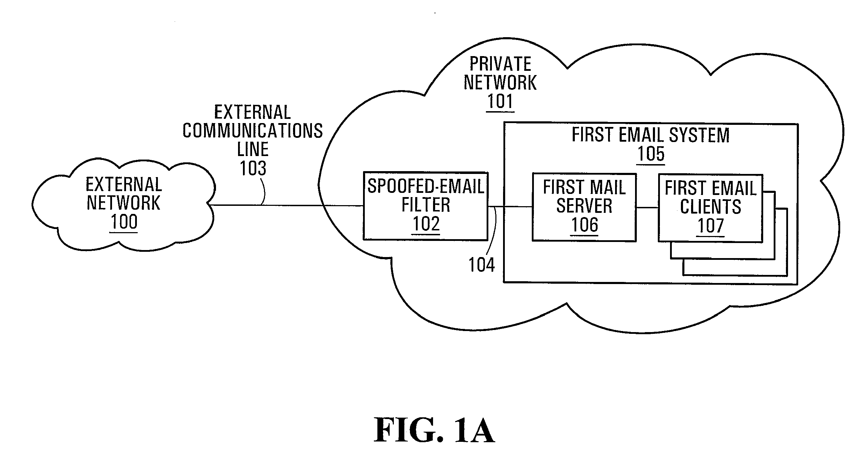

Fig. 1A is a schematic diagram of a computer communication system containing a spoofed email filter. In Fig. 1A, an external network 100 is connected via an external communications line 103 to a spoofed-email message filter 102 that is located in a private network 101. External network simply represents everything outside the private network 101.

The spoofed email filter 102 is preferably a software entity residing on a physical computing device in the private network 101, but, more generally, it may be embodied in hardware or software or both.

Within the private network 101, the spoofed-email message filter 102 is connected via an internal connection 104 directly or indirectly to a first mail server 106 forming part of a first email system 105. The first mail server 106 is connected to a series of first email clients 107. Email clients 107 represent any devices in the private network that can receive and send email messages. This may include end user devices and/or "Wireless Gateway" and/or "Wireless Application Server" that acts as a client on behalf of one or more wireless device users.

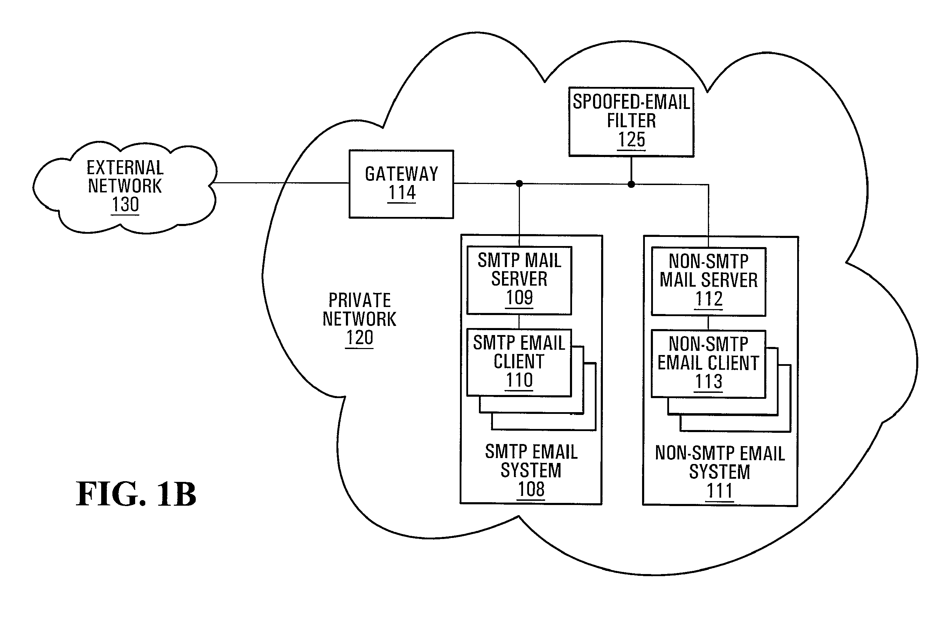

In some embodiments, the first email message system is a proprietary email message system which does not use Internet headers such as SMTP email message headers. Certain of the detailed filtering methods described below are particularly suited to this particular case. In another embodiment, the first email message system does use Internet headers. In the specific examples, Internet headers in the form of SMTP headers are assumed. An email system employing SMTP headers is referred to herein as an SMTP email system while a system that does not use SMTP email headers is referred to herein as a non-SMTP email system. More generally, a combination of one or more email systems may be present each one of which may either use or not use Internet headers. The example of Figure 1B described below includes one SMTP email system and one non-SMTP email system.

The system shown in Fig. 1A and the systems described below provide specific examples of computer communication systems containing a spoofed-email message filter. The topology of the private network may vary greatly, and a wide variety of network components, such as firewalls, antivirus filters, FTP servers, shared databases, etc., may or may not be present. The private networks may comprise a plurality of email message systems with each system containing a plurality of mail servers and email message clients. Email message systems within the private network may be proprietary email message systems, such as Microsoft Exchange Server™, Lotus Notes™, and GroupWise™, which may or may not use SMTP email message headers, and public email message systems that typically do use SMTP email message headers.

A message from external to the private network 101 that is directed to a mail client 107 within the first email system 105 is received through the spoofed email filter 102. This is achieved by setting an IP address of a port on the spoofed email system to be the physical address of email addresses in the private network from the perspective of the external network. Alternatively, another device, such as a gateway, may receive all email messages and forward them directly to the spoofed email filter. This may for example involve the filter first "sniffing" sessions and determine which mail session packets should be blocked, much in the same way as how a firewall operates. Messages may also be generated within the network for other addresses within the network. In the embodiment of Figure 1A, such messages do not pass through the spoofed email filter 102.

In operation, the spoofed email filter 102 receives an email message originating from the external network 100 which is destined to one of the first email message clients 107 via the external communications line 103. The spoofed email filter 102 detects any email message that appears to have been spoofed before it can reach the email client. Several detailed example methods of performing this detection are provided below. Any email message that does not appear spoofed is forwarded on to the first email system 105 for normal processing and eventual communication to the intended recipient.

The spoofed email filter 102 treats a spoofed email message in a differential manner compared to an email message that is not spoofed by subjecting spoofed email messages to special processing. The special processing of a spoofed email message may involve, for example, discarding the email message, archiving the email message, logging information with respect to the email message, flagging the email message to alert the email message recipient, or generating an alert message to the appropriate personnel.

In Fig. 1A, the spoofed email filter 102 is directly in the path of incoming email messages between the external network 100 and the first email system 105. As a result, the spoofed email filter 102 can treat all email messages received over the external communications line 103 as email messages originating from the external network 100. At the same time, an email message originating from a first email message client 107 which is destined for another email message client within the first email message system 105 can bypass the spoofed email filter 102 completely. Email messages originating from within one of the first email message clients 107 that are destined for the external network are simply forwarded on. In some embodiments, such outgoing messages can also be processed by the spoofed email filter 102 to ensure that spoofed messages originating within the private network 101 are not forwarded.

Fig. 1B is a schematic diagram of a second computer communication system containing a spoofed email filter. In Fig. 1B, a spoofed email filter 125 is provided in a location that is not directly in the path of incoming email. In Fig. 1B, an external network 130 is connected to a private network 120 through a gateway 114. The gateway 114 is configured to forward incoming email messages to the spoofed email filter 125.

In the particular example of Figure 1B, there are two email systems 108,111 within the private network 120. Email system 108 is an SMTP email system and email system 111 is a non-SMTP email system. The SMTP email system 108 contains an SMTP mail server 109 connected to SMTP email clients 110. The non-SMTP email system 111 contains a non-SMTP mail server 112 connected to non-SMTP email clients 113. The SMTP email system 108 uses SMTP email message headers. The non-SMTP email message system 111 does not use SMTP email message headers.

In operation, the spoofed email filter 125 receives email messages originating from the external network 100 that are destined for an SMTP email message client 110 or a non-SMTP email message client 113 via the gateway 114. Such messages are then processed to detect spoofed email messages, and each spoofed email message is subject to special processing. Email messages that are not spoofed are forwarded on to the appropriate email system (108 or 111) for communication to the appropriate email client (110 or 113).

In some embodiments, email messages generated in one of the internal email systems that are directed to another of the email systems are also processed by the spoofed email filter.

For example, messages from the SMTP mail system may be filtered while the messages from the non-SMTP mail system are not filtered. As detailed below, messages from non-SMTP mail systems are harder to spoof in some systems. In a particular example of this, the system of Figure 1B can be configured such that, the spoofed email filter 125 also receives email messages originating from the SMTP email message system 108 and destined for the non-SMTP email message client 113. This may for example be achieved by providing an interface on the spoofed email filter which receives SMTP email from SMTP email message system 108 and converts it to non-SMTP email and forwards it to non-SMTP mail system 111. For example, in the case where non-SMTP mail server 112 is provided by a Microsoft Exchange Server, the spoofed email filter 125 could forward the body of the trusted SMTP email received from SMPT email message system 108 using MAPI (Messaging Application Programming Interface). It would be preferable in that situation to disable the SMTP features of the Exchange Server so as to ensure that the Exchange Server cannot inadvertently receive SMTP without it going through the spoofed mail filter 125, while email messages originating from the non-SMTP email message system 111 simply bypass the spoofed email filter 125.

In systems where the spoofed email filter 125 in Fig. 1B receives email messages from both the external network 130 and the internal SMTP email message system 108, the filter 125 cannot treat all email messages received over the shared communications line 114 as email message originating from the external network 130.

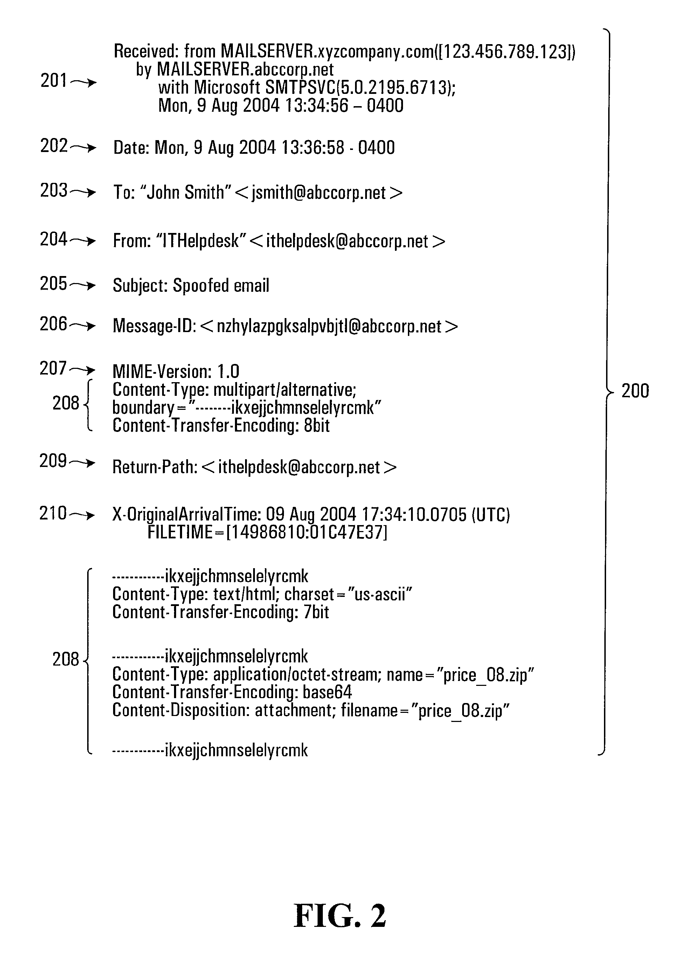

Fig. 2 is an illustration showing an example of an SMTP email message header contained in an email message that may, for example, be received by the spoofed email filter of Fig. 1A or 1B.

Email messages typically consist of two major components: (i) a message header; and (ii) the message itself. The message header contains information about the originator, recipient, message contents, and other information about the email message. In Fig. 2, fields in the SMTP email message header 200 are displayed, as follows:
a) A Received field 201 that contains trace information that provides information about the mail servers the email message passed through on its way to the recipient. Multiple Received fields may be present depending on how many mail servers the email message passed through.
b) A Date field 202 that contains the time and date when the email message was received by the recipient.
c) A To field 203 that contains the designated recipient's plain name and complete email message address.
d) A From field 204 that should contain the originator's plain name and complete email message address.
e) A Subject field 205 that contains information concerning the subject of the email message.
f) A Message-ID field 206 that is a unique number that the sending mail server created to go with the email message.
g) A MIME-Version field 207 that indicates the version of the Multimedia Internet Mail Extensions (MIME) protocol being used. MIME is an extension to SMTP that provides a mechanism for handling different types of information in a single message. MIME information is commonly present in SMTP email message headers.
h) MIME related fields 208 that provide information about the email message contents.
i) A Return-Path field 209 that shows the destination for any reply to the email message.
j) A X-OriginalArrivalTime field 210 that contains the time when the email message was originally sent.

Typically, in an internal message that does not use internet headers the received 201 field would either NOT be present, or if present would include a trace which would NOT be clear proof of a spoofed email message.

In a first method of detecting spoofed messages, the SMPT header is examined to identify inconsistencies in the header. For example, if an inconsistency between the "from" field and the received field is found, then the message is a spoofed message.

Turning now the specific header shown in Fig. 2, the from field 203 indicates an email address on the domain "abccorp.net". The received field 201 indicates that the email message originated in the domain "xyzcompany.com". The fact that the domain of the from field does not match the domain where the message originated is indicative of a spoofed email message. In the event the from field has a domain that is the same as the network receiving the message, the purpose of this spoofed email is to appear to be originated within the same network, and thus be from a trusted source.

More specifically, assume that the domain of the private network is "abccorp.net". The From field 204 identifies the originator of the email message as ithelpdesk@abccorp.net. Since the domain name of the private network is "abccorp.net," the From field 204 is indicating that the email message originated from inside the private network. However, the Received field 201 clearly indicates that the email message did not originate from inside the private network. The Received field 201 indicates that the email message came from the computer called "MAILSERVER.xyzcompany.com" whose IP address is "123.456.789.123," and the computer that received it was "MAILSERVER.abccorp.net." As "xyzcompany.com" is the domain name of a computer external to the private network, the computer called "MAILSERVER.xyzcompany.com" must be external to the private network. Therefore the email message must have originated from outside the private network, and the From field 204 must have been altered (that is, "spoofed") by the actual originator. As a result, the spoofed email filter handling this email message subjects the email message to special processing.

In some embodiments, SMTP email message headers are not used for messages between email clients that are both located within the private network. In this case, the mere presence of an SMTP email message header on a message purporting to be internally generated is sufficient for the spoofed email filter to determine that the email message had been spoofed.

The SMTP email message header displayed in Fig. 2 is a particular example of an SMTP email message header. Numerous other fields are possible in SMTP email message headers, including an Alternate-Recipient field, a Reply-To field, and a Resent-To field. Not all fields need to be included in every header.

Different methods of detecting spoofed messages through the use of SMPT headers will now be described.

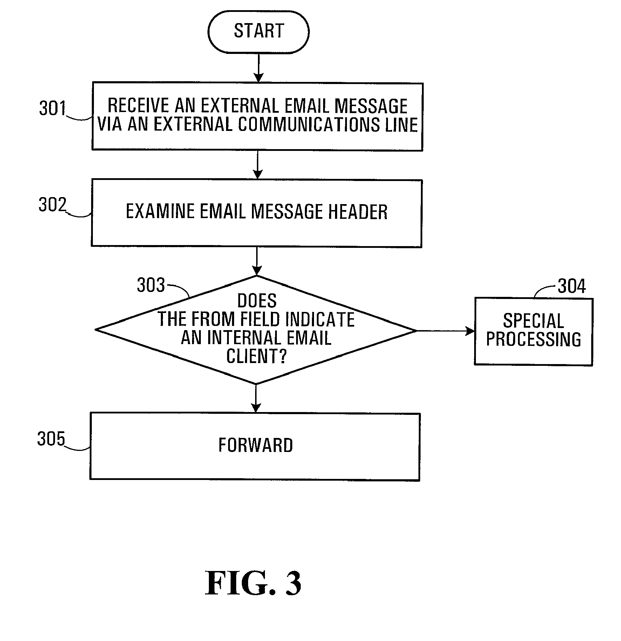

Fig. 3 is a flowchart of a method of processing an external email message that may, for example, be executed by the spoofed-email message filter 102 of Fig. 1A.

In Fig. 3, at 301, an external SMTP email message is received by the spoofed email filter. This may be received directly as in the example of Figure 1A, or indirectly as in the example of Figure 1B. For this particular method, it is assumed that any message with an SMTP header must originate externally to the network. In other words, SMTP headers are not used for messages being sent within the network. At 302, the SMTP email message header is examined. At 303, the method checks whether a From field in the header indicates an internal email message client as the originator of the email message. If it does, the email message is considered spoofed and is subjected to special processing at 304. This determination can be made because email messages from internal addresses should not have SMTP headers. If the message does not have a From field indicating an internal client, then the email message is forwarded at 305.

According to one embodiment, a configuration parameter is set that identifies the domain name of a private network containing a spoofed email filter. This parameter is compared to the domain name in the From field. If the domain names match, the spoofed email filter determines that an internal email message client has been indicated as the originator of the email message.

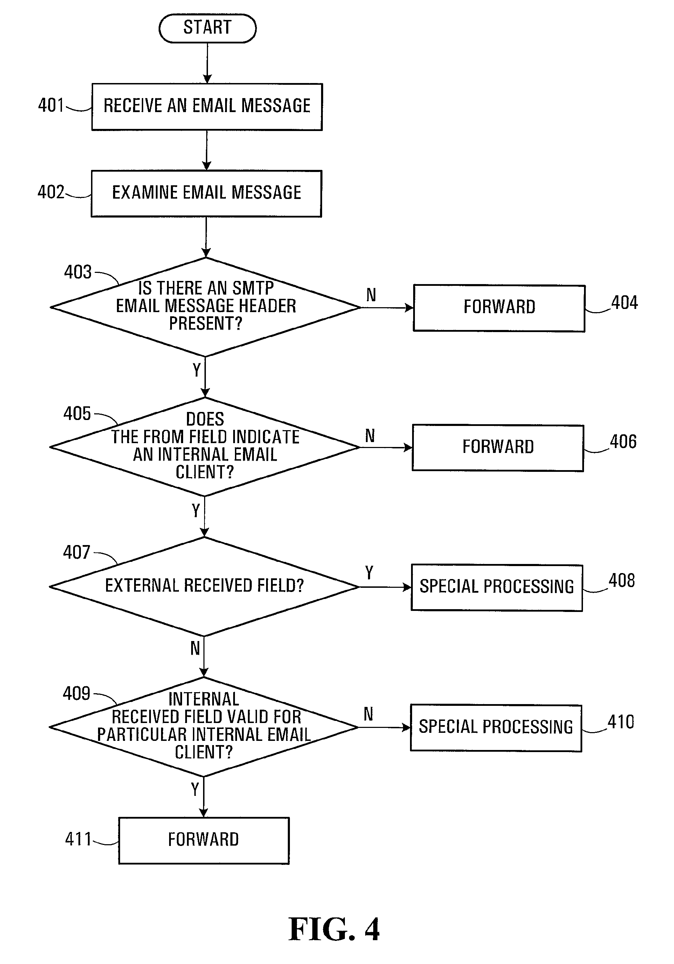

Fig. 4 is a flowchart of another method of processing an email message to detect spoofed email messages. This method is applicable where the spoofed email filter is situated to receive both external email messages with SMTP headers, internal email messages that do not have SMTP headers, and internal email messages that do have SMTP headers such as might be the case with the example of Figure 1B. The method starts at step 401 with the receipt of an email message to be processed and examination of the header that might be present (step 402).

Messages may originate internally to the network and not have headers. Such messages are assumed not to be spoofed. To handle this case, in Fig. 4, at step 403, the method checks whether an SMTP email message header is present. If there is no SMTP email message header present, the email message is forwarded on at 404. This may be the case, for example, where the email message is being sent from one internal email message client to another internal email message client using a proprietary email message system that does not use SMTP email message headers.

Messages may have SMTP headers. There are three different permutations of messages that may have such headers. First, a message with an SMTP header may originate externally to the network with an external "from" field in which case the message is likely valid. Second, a message with an SMTP header may originate externally to the network with an internal "from" field in which case the message is likely spoofed. Third, a message with an SMTP header may originate internally to the network, but nonetheless be spoofed. Different implementations may not detect all types of spoofed messages.

To handle the first permutation where an SMTP header is contained in valid messages received from external to the network, at step 405 the method determines whether the From field in the SMTP email message header indicates an internal email message client as the originator of the email message. If the From field in the SMTP email message header does not indicate an internal email message client as the originator of the email message, the email message is forwarded at 406.

To handle the second permutation where a message with an SMTP header originates externally to the network with an internal "from" field in which case the message is likely spoofed, at step 407 the method checks whether Received field in the SMTP email message header indicates a message received from an external to the private network. If so, the email message is considered spoofed and subjected to special processing at step 408.

To handle the third permutation where a message with an SMTP header originates internally to the network (i.e. even received path is internal), but nonetheless is spoofed, the method, at 409, checks received field is valid for the internal email message client purporting to be the source of the message. This may for example require knowledge of a set of internal clients that use SMTP and a set of internal clients that do not use SMTP. An internal SMTP message that appears to be from an internal client that does not use SMTP is likely spoofed. If such headers are not valid for the internal email message client, the email message is considered spoofed and is subjected to special processing at 410 otherwise the message is forwarded at step 411.

In one embodiment, a configuration parameter is set for each internal email message client that indicates whether an SMTP email message header is valid for that internal email message client. In another embodiment, a separate communications line is used for internal email message clients that originate email messages containing SMTP email message headers. In this case, the spoofed-email message filter recognizes that email message originating via the separate communications line uses SMTP email message headers and therefore, such headers are valid for the email message.

Other techniques may be used to determine the validity of an SMTP email message header being present in an email message. For example, separate configuration parameters could be maintained for groups of internal email message clients depending on which internal email message system they are associated with. This may be useful, for example, where a private network contains a mixture of internal email message systems, and the use of SMTP email message headers depends on which internal email message system an email message client is in.

In one embodiment, a list of valid mail servers is configured that identifies what mail servers may be valid in a Received field for an internal email message. If only valid mail servers are present, then the Received field is considered valid and the email message is forwarded on. If a mail server appears in a Received field that is not identified as being valid, the email message is considered spoofed and subjected to special processing.

The validity of Received field information may be determined in other ways. For example, the domain name of the mail servers identified in the Received field information could be compared to the domain name of the private network. If the domain names do not match, the email message could be considered spoofed and subjected to special processing. Alternatively, where a private network's internal email message system, or systems, use a plurality of mail servers, configuration parameters could be set that identify valid Received field information depending on the originating and recipient email message clients.

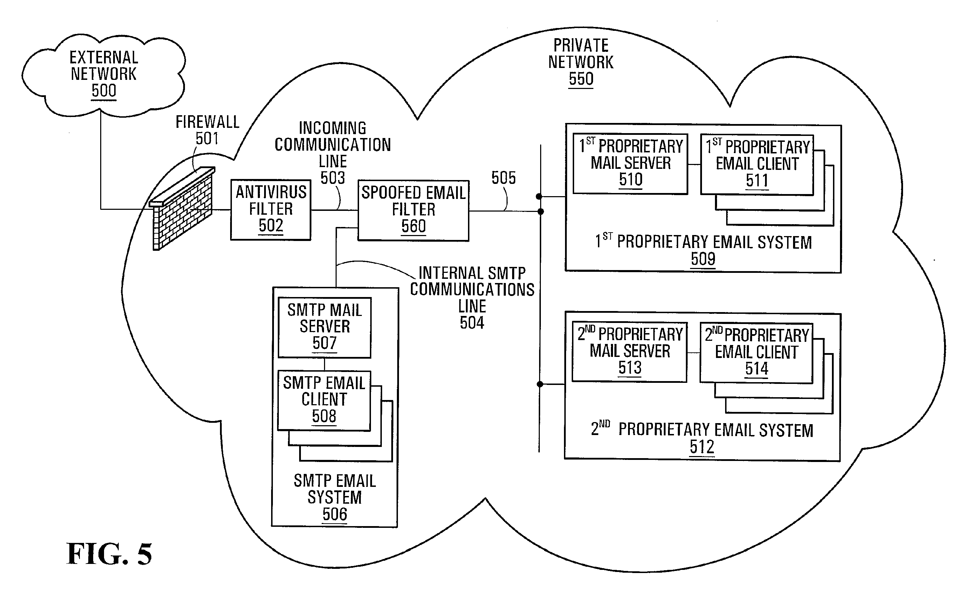

Fig. 5 is a schematic diagram of another computer communication system containing a spoofed-email message filter.

In Fig. 5, an external network 500 is connected to a firewall 501 on the boundary of a private network 550. The private network 550 contains the firewall 501, an antivirus filter 502, a spoofed email filter 560, a first proprietary email message system 509, a second proprietary email message system 512, and an SMTP email message system 506. The first proprietary email message system 509 contains a first proprietary mail server 510 and first proprietary email clients 511. The second proprietary email message system 512 contains a second proprietary mail server 513 and second proprietary email message clients 514. The SMTP email message system 506 contains an SMTP mail server 507 and SMTP email message clients 508. The first proprietary email message system 509 and the second proprietary email message system 512 do not support the use of SMTP email message headers. The SMTP email message system 506 does support the use of SMTP email message headers.

In Fig. 5, the firewall 501 is connected to the antivirus filter 502, and the antivirus filter 502 is connected to the spoofed email filter 560 via an incoming communications line 503. The spoofed email filter 560 is connected to the first proprietary mail server 510 and the second proprietary mail server 513 via an internal shared communications line 505. The spoofed email filter 560 is connected to the SMTP mail server 507 via an internal SMTP communications line 504. Within the first proprietary email message system 509, the first proprietary email message client 511 is connected to the first proprietary mail server 510. Within the second proprietary email message system 512, the second proprietary email message client 514 is connected to the second proprietary mail server 513. Within the SMTP email message system 506, the SMTP email message client 508 is connected to the SMTP mail server 507.

In operation, an email message originating from the external network 500 is first processed by the firewall 501. If the email message is not stopped by the firewall, it is forwarded to the antivirus filter 502. If the email message is not stopped by the antivirus filter 502, it is forwarded to the spoofed email filter 560 via the incoming communications line 503. The spoofed email filter 560 employs one of the methods described previously to process the email message.

Any email message that does not appear spoofed is simply forwarded on via the internal shared communications line 505 or the internal SMTP communications line 504 depending on the intended recipient. Any email message that appears to have been spoofed is subjected to special processing.

An email message originating from the SMTP email message system 506 that is being sent to an email message recipient in the first proprietary email message system 509 or the second proprietary email message system 512 is received by the spoofed-email message filter 560 via the internal SMTP communications line 504. Preferably, the spoofed email filter 560 applies the method described in Fig. 4 to process the email message. As the email message is being received via a separate communications line, the internal SMTP communications line 504, the spoofed-email message filter 560 recognizes that the email message uses SMTP email message headers and that, therefore, such headers are valid for the email message.

An email message originating from the SMTP email message client 508 that is being sent to another SMTP email message client within the SMTP email message system 506 is not forwarded to the spoofed-email message filter 560. Similarly, an email message originating from either the first proprietary email message system 509 or the second proprietary email message system 512 is not forwarded to the spoofed email filter 560 for processing.

Those skilled in the art will appreciate that a spoofed email filter may be implemented at different places in a private network. For example, it may be implemented as a stand-alone application on a separate computing device, or it may be implemented at a firewall, at a antivirus filter, at one or more internal mail servers, or even at one or more email message clients. Also, in some private networks, a spoofed email filter may be desired between mail servers within a single internal email message system that supports SMTP email message headers, or between mail servers in different internal email message systems that support SMTP email message headers. This may be the case, for example, where the private network is large and spoofed-email message between internal email message clients is considered a problem.

While the preferred embodiments have been described in the context of SMTP headers, more generally Internet headers may be used in the same manner.

What has been described is merely illustrative of the principles of the application. Other arrangements and methods can be implemented by those skilled in the art without departing from the spirit and scope of the present application.

## Claims

1. A spoofed email filter (102) adapted to process email messages for a private network (101), the spoofed email filter comprising:
an input (103) for receiving email messages;
an output (104) for forwarding messages after being processed;
the spoofed email filter being adapted to process (303) each email message to determine if the email message has been spoofed to appear to originate from the private network or not using email message headers and subjecting each email message that has been spoofed to special processing (304).

2. The spoofed email filter of claim 1 adapted to receive email messages before their delivery to email clients.

3. The spoofed email filter of claim 1 or claim 2 adapted to receive at least some email messages having Internet headers (200).

4. The spoofed email filter of any preceding claim for use directly in a communications path between an external network (100) and an email system (105) of the private network, the spoofed email filter being adapted to process each email message by:
determining that a received email message is spoofed where an email message header indicates that the email message originated from an internal email client (303).

5. The spoofed email filter of any one of claims 1 to 3 adapted to receive email messages with Internet headers that originate external to the private network and email messages without Internet headers that originate internal to the private network, the spoofed email system being adapted to process each email message by:
if the email message does not have an Internet header, forwarding the email message; or
if the email message has an Internet header, using the Internet header to determine if the message is spoofed or not (302,303).

6. The spoofed email filter of claim 5 wherein using the Internet header to determine if the message is spoofed or not comprises:
determining if a "from" field indicates an internal e-mail client (301); and
if the "from" field indicates an internal e-mail client, determining the message is spoofed (303).

7. The spoofed email filter of any one of claims 1 to 3 adapted to receive email messages with Internet headers that originate external to the private network and messages with Internet headers that originate internal to the private network, the spoofed email filter being adapted to process each email message by:
if a "from" field of a received email message indicates the message originated external to the private network, forwarding the message (405,406); or
if the "from" field of the message indicates the message originated internal to the private network and if a "received" field in an Internet header of the message indicates the message was received from external to the private network, determining that the message is spoofed (405,407).

8. The spoofed email filter of claim 7 further adapted to:
if the "from" field of the message indicates the message originated internal to the private network, and if the "received" field indicates the message was received from internal to the private network, determining if the "received" field is valid for the "from" field of the message, and if not, determining that the message is spoofed (405,407,409) .

9. The spoofed email filter of claim 8 adapted to maintain information allowing a determination for each internal email address of whether Internet headers should be present or not, and to use this in making the determination of whether the "received" field is valid for the "from" field of each message.

10. The spoofed e-mail filter of any one of claims 3 to 9 wherein the Internet headers are SMTP headers.

11. A network (101, 120) comprising:
the spoofed email filter (102, 125) of any one of claims 1 to 10; and
an internal email system (105, 108);
wherein the spoofed email filter is connected to receive externally originated email messages prior to their being forwarded to the internal email system.

12. The network (120) of claim 11, wherein the internal email system is an internal SMTP email system (108).

13. The network (120) of claim 12 further comprising:
an internal non-SMTP email system (111).

14. A method comprising:
receiving e-mail messages for a private network;
processing each email message to determine if the email message has been spoofed to appear to originate from the private network or not using email message headers; and
subjecting each email message that has been spoofed to special processing (304).

15. The method of claim 14 comprising receiving the email messages before their delivery to email clients.

16. The method of claim 14 or claim 15 wherein at least some of the email messages have Internet headers (200).

17. The method of any one of claims 14 to 16 wherein processing each email message comprises:
determining that a received email message is spoofed where an email message header indicates that the email message originated from an internal email client (303).

18. The method of any one of claims 14 to 16 wherein:
receiving email messages comprises receiving email messages with Internet headers that originate external to the private network and receiving email messages without Internet headers that originate internal to the private network;
processing each email message comprises:
if the email message does not have an Internet header, forwarding the email message; or
if the email message has an Internet header, using the Internet header to determine if the message is spoofed or not (302,303).

19. The method of claim 18 wherein using the Internet header to determine if the message is spoofed or not comprises:
determining if a "from" field indicates an internal e-mail client (301); or
if the "from" field indicates an internal e-mail client, determining the message is spoofed (303).

20. A computer readable medium having instruction means stored thereon for implementing the method of any one of claims 14 to 19.

21. A communications system comprising the spoofed email filter of any one of claims 1 to 10.

## Amended claims

### Amended claims in accordance with Rule 86(2) EPC.

**1.** A spoofed email filter (102) adapted to process email messages received from a first network (100,101) destined for a second network (101, 100), the spoofed email filter comprising:
a first connection (103, 104) to the first network for at least receiving email messages from the first network;
a second connection (104, 103) to the second network for at least selectively forwarding non-spoofed email messages received via the first connection to the second network after being processed;
the spoofed email filter being adapted to process (303) each email message to determine if the email message has been spoofed to appear to originate from the second network by determining both that the email message headers indicate that the email message originates from the second network and that the email message was received over the first connection and subjecting each email message that has been spoofed to special processing (304).

**2.** The spoofed email filter of claim 1 wherein at least some of the e-mail message headers are Internet e-mail message headers (200) .

**3.** The spoofed email filter of claim 1 or claim 2 wherein the first network is an external network (100) and the second network is a private network.

**4.** The spoofed email filter of claim 3 wherein non-spoofed email messages received via the first connection are selectively forwarded to an email system (105) of the private network after being processed, the spoofed email filter being adapted to process each email message by:
determining that a received email message is spoofed where an email message header indicates that the email message originated from an email client (303) of the private network.

**5.** The spoofed email filter of any preceding claim adapted to receive email messages with Internet email message headers that originate external to the second network and email messages without Internet email message headers that originate internal to the second network, the spoofed email system being adapted to process each email message by:
if the email message does not have an Internet email message header and originated internal to the second network, forwarding the email message; or
if the email message has an Internet email message header and originated external to the second network, using the Internet email message header to determine if the email message is spoofed or not (302,303).

**6.** The spoofed email filter of claim 5 wherein using the Internet email message header to determine if the email message is spoofed or not comprises:
determining if a "from" field indicates an internal e-mail client (301); and
if the "from" field indicates an internal e-mail client, determining the email message is spoofed (303).

**7.** The spoofed e-mail filter of claim 2, 5 or 6 wherein the Internet email message headers are SMTP headers.

**8.** A network (101,120) comprising:
the spoofed email filter (102,125) of any one of claims 1 to 7; and
an internal email system (105,108);
wherein the spoofed email filter is connected to receive externally originated email messages prior to their being forwarded to the internal email system.

**9.** The network (120) of claim 8, wherein the internal email system is an internal SMTP email system (108).

**10.** The network (120) of claim 9 further comprising: an internal non-SMTP email system (111).

**11.** A method comprising:
intercepting e-mail messages from a first network (100,101) destined for a second network (101, 100);
processing each email message to determine if the email message has been spoofed to appear to originate from the second network by determining both that the email message headers indicate that the email message originates from the second network and that the email message was received from the first network;
subjecting each email message that has been spoofed to special processing (304); and
selectively forwarding non-spoofed email messages received to the second network after being processed.

**12.** The method of claim 11 wherein at least some of the email messages headers are Internet email message headers (200).

**13.** The method of claim 11 or claim 12 wherein the first network is an external network (100) and the second network is a private network (101).

**14.** The method of any one of claims 11 to 13 wherein processing each email message comprises:
determining that a received email message is spoofed where an email message header indicates that the email message originated from an email client (303) of the second network.

**15.** The method of any one of claims 11 to 13 further comprising:
receiving email messages with Internet email message headers that originate external to the second network and receiving email messages without Internet email message headers that originate internal to the second network;
wherein processing each email message comprises:
if the email message does not have an Internet email message header and originated external to the second network , forwarding the email message; or
if the email message has an Internet email message header and originated internal to the second network, using the Internet email message header to determine if the email message is spoofed or not (302,303).

**16.** The method of claim 15 wherein using the Internet email message header to determine if the email message is spoofed or not comprises:
determining if a "from" field indicates an internal e-mail client (301); or
if the "from" field indicates an internal e-mail client, determining the email message is spoofed (303).

**17.** The method of any one of claims 12, 15, or 16 wherein the Internet email message headers are SMTP headers.

**18.** A computer readable medium having instruction means stored thereon for implementing the method of any one of claims 11 to 17.

**19.** A communications system comprising the spoofed email filter of any one of claims 1 to 7.
